(19) Europäisches Patentamt

European Patent Office

Office européen des brevets

(11) Veröffentlichungsnummer: **0 278 027 B1**

(12) **EUROPÄISCHE PATENTSCHRIFT**

(45) Veröffentlichungstag der Patentschrift: **29.04.92**

(21) Anmeldenummer: **87101781.0**

(22) Anmeldetag: **09.02.87**

(51) Int. Cl.⁵: **C08L 25/12**, C08L 51/00

(54) **Thermoplastische Formmasse auf Basis von ABS.**

(43) Veröffentlichungstag der Anmeldung:
**17.08.88 Patentblatt 88/33**

(45) Bekanntmachung des Hinweises auf die
Patenterteilung:
**29.04.92 Patentblatt 92/18**

(84) Benannte Vertragsstaaten:
**BE DE FR GB IT NL**

(56) Entgegenhaltungen:
**DE-A- 1 569 141**

(73) Patentinhaber: **BASF Aktiengesellschaft
Carl-Bosch-Strasse 38
W-6700 Ludwigshafen(DE)**

(72) Erfinder: **Hoenl,Hans,Dr.
Hauptstrasse 69 a
W-6719 Obersuelzen(DE)**

**Beschreibung**

Die Erfindung betrifft eine thermoplastische Formmasse auf Basis von ABS die aus einer Hartmatrix aus einem Styrol-Acrylnitril-Copolymerisat und einer Weichphase aus einem Pfropfmischpolymerisat aufgebaut ist. ABS-Formmassen dieser Art sind z.B. in der BE-A- 852 511 (1), der US-A-4 221 883 (3) und den DE-A- 1 941 018 (2) und 1 569 141 (4) beschrieben. Sie enthalten stets sowohl in der Hartmatrix als auch in der Weichphase die Monomeren Styrol und Acrylnitril, was sich aus dem Herstellverfahren ergibt.

Thermoplastische Formmassen auf Basis von ABS können nach verschiedenen Verfahren hergestellt werden. In jedem Falle resultiert ein 2-Phasenaufbau aus einer Hartmatrix (S/AN Copolymerisat) und einer darin fein verteilten Weichphase in Form eines Pfropfpolymerisats (S/AN gepfropft auf Polybutadien). Die Weichphase liegt immer in Form diskreter Teilchen vor, die unterschiedliche Größen aufweisen. So können bei der Herstellung von ABS nach dem Emulsionsverfahren Teilchengrößen der Weichphase im Bereich von ca. 0,1-0,7 $\mu$m eingestellt werden. Der Teilchengrößenbereich der Weichphase für Masse-Suspensions- bzw. Lösungs-ABS kann im Bereich von 0,5 bis 20 $\mu$m liegen. Die Weichphasen von Standardprodukten weisen in der Regel bei Lösungs-ABS eine mittlere Teilchengröße im Bereich von 1-5 $\mu$m auf.

Die bekannten ABS-Formmassen, die nach irgendeinem Emulsions-, Masse-Suspensions- oder Lösungsverfahren hergestellt werden, sind opak, d.h. nicht einmal translucent. Transparente Formmassen, die nur aus Styrol, AN und Butadien bestehen, gibt es bislang nicht. Nur durch Angleichen der Brechungsindices von Hartphase (S/AN) und Weichphase (in der Regel PBu gepfropft mit S/AN) unter Mitverwendung von Methylmethacrylat in der Hartphase gelingt es, ein transparentes ABS (sogenanntes AMBS) herzustellen.

Es war überraschend, daß es (auch unter Berücksichtigung der Herstellung von schlagfestem Polystyrol) auf einfachem Wege gelingen würde, zu transparentem, nur auf Basis von Styrol, AN und Butadien aufgebautem ABS zu gelangen. Da es aus (3) bekannt war, Styrol-Butadien-Blockcopolymere mit einem Styrolgehalt von höchstens 45 Gew.-% zu verwenden, die nicht zu transparenten schlagzähen Polystyrol-Formmassen führen, konnte nicht erwartet werden, daß die Verwendung von Blockcopolymerisaten mit Styrolgehalten oberhalb von 50 Gew.-% [vgl. (2), Beispiel 2, Verwendung von Styrol-Blockcopolymerisaten mit 30 bzw. 40 Gew.% Styrol für ABS] zu einem transparenten Produkt führen würde, in dem die Weichkomponente nicht als diskrete Partikel, sondern in einer lamellenartigen Struktur vorliegt.

In (3) sind beispielhaft Massepolymerisationsverfahren zur Herstellung von ABS mit Styrol-Butadien-Blockcopolymerisaten beschrieben, wobei letztere 70 Gew.% Butadiene und 30 Gew.% Styrol aufweisen. Auch ausgehend von (3) war nicht zu erwarten gewesen, daß es bei Verwendung von Styrol-Butadien-Blockcopolymerisaten mit Styrolgehalten von mehr als 50 Gew.% gelingen würde, transparentes ABS zu erhalten.

Die Lösung der Aufgabe gelingt durch eine Formmasse gemäß Patentanspruch 1.

Die Erfindung betrifft daher eine thermoplastische Formmasse, enthaltend, jeweils bezogen auf die Formmasse aus A + B,

A 50 bis 95, insbesondere 60 bis 90 Gew.-% einer Hartmatrix, aufgebaut aus bezogen auf A,

$a_1$) 98 bis 50, insbesondere 85 bis 70 Gew.-% Styrol,

$a_2$) 2 bis 50, insbesondere 15 bis 30 Gew.-% Acrylnitril

B 50 bis 5, insbesondere 40 bis 10 Gew.-% einer Weichphase, die in der Hartmatrix gleichmäßig verteilt ist und die ein Pfropfmischpolymerisat aus den Monomeren $a_1$) und $a_2$) und einem Styrol-Butadien-Blockcopolymerisat darstellt.

Die Formmasse ist dadurch gekennzeichnet, daß das Styrol-Butadien-Blockcopolymerisat durch anionische Polymerisation mittels eines Lithium-Initiators hergestellt worden ist und einen Styrolgehalt von 50 bis 95 Gew.% und einen Butadiengehalt von 50 bis 5 Gew.%, jeweils bezogen auf das Blockpolymerisat, aufweist und ein Molekulargewicht (Gewichtsmittel) im Bereich von 50.000 bis 400.000 besitzt.

Nachstehend werden der Aufbau der erfindungsgemäßen Formmasse, d.h. insbesondere die Morphologie der erfindungsgemäßen Formmasse sowie das Verfahren zur Herstellung und die dafür erforderlichen Ausgangsstoffe und Hilfsmittel beschrieben.

Die Formmasse enthält die Komponenten A und B, vorzugsweise besteht sie aus diesen. Zur Verarbeitung werden übliche Zusatzstoffe (Komponente C) zugesetzt.

Komponente A

Die erfindungsgemäße Formmasse ist aus einer Hartmatrix aus mindestens einem Copolymerisat aus $a_1$) Styrol und $a_2$) Acrylnitril aufgebaut. Diese Hartmatrix macht, bezogen auf die Formmasse aus den Komponenten A + B, 50 bis 95 Gew.%, vorzugsweise 60 bis 90 Gew.%, aus. Als Monomeres $a_1$) zum Aufbau der Hartmatrix kommt insbesondere Styrol in Frage. Es können jedoch auch alpha-Methylstyrol oder

2

Mischungen mit Styrol verwendet werden; bevorzugt ist jedoch die ausschließliche Verwendung von Styrol, so daß die Hartmatrix bevorzugt aus Poly(Styrol-Acrylnitril) besteht. Die Hartmatrix kann Viskositätszahlen im Bereich von 50 bis 100 ml/g (0,5 Gew.% in Dimethylformamid), insbesondere im Bereich von 60 bis 90 ml/g, aufweisen. Dies entspricht mittleren Molgewichten ($M_w$) im Bereich von 70.000 bis 170.000, insbesondere von 90.000 bis 150.000. Die Herstellung derartiger Copolymerisate ist dem Fachmann geläufig.

Die Zusammensetzung der Hartmatrix kann in weiten Grenzen variiert werden. Der Monomerbestandteil $a_1$) kann 98 bis 50 Gew.-%, bevorzugt 95 bis 70 Gew.-%, besonders bevorzugt 90 bis 70 Gew.-% und insbesondere 85 bis 70 Gew.-% betragen. Der Rest zu 100 ist jeweils Acrylnitril (Komponente $a_2$).

(Hinzuweisen ist darauf, daß bei Verwendung von ausschließlich Styrol eine andere Morphologie der Weichphase unter Ausbildung von Kapselteilchen erhalten wird.)

### Komponente B

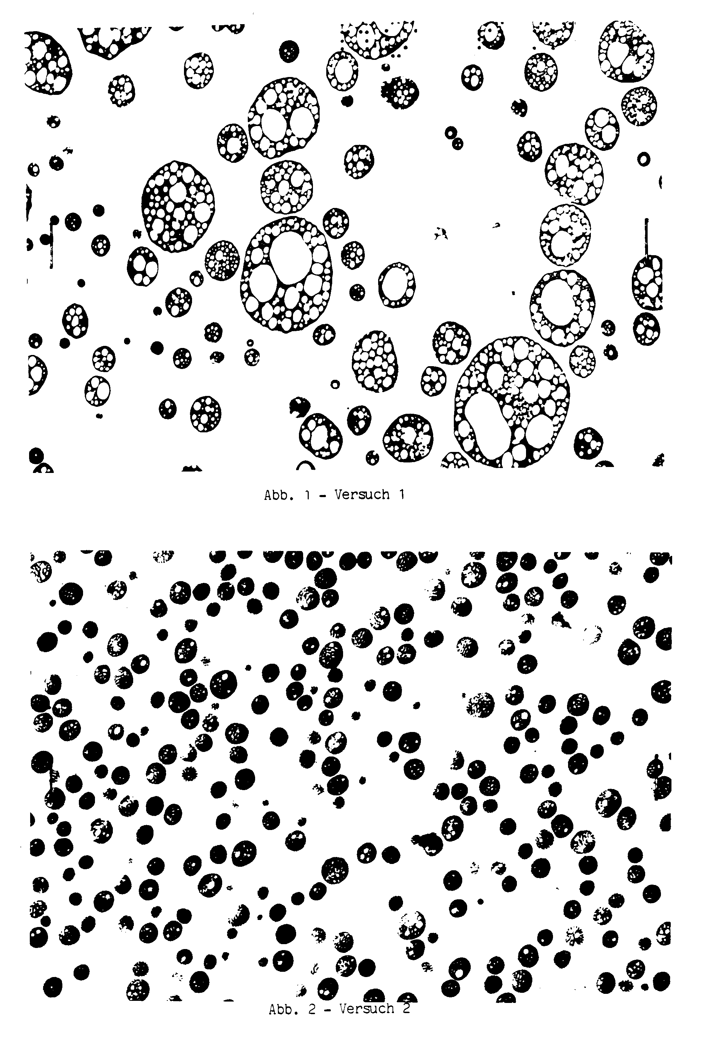

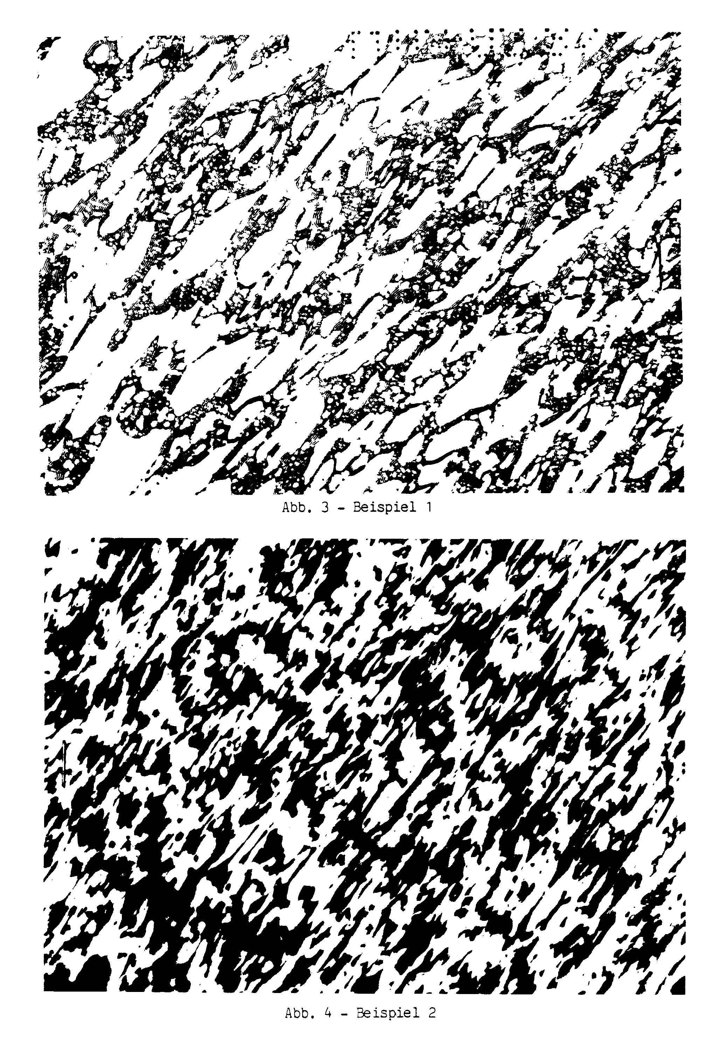

Die erfindungsgemäße Formmasse weist als Komponente B eine Weichphase auf, die fein dispergiert in der Hartmatrix vorliegt. Die Weichphase ist in einem Anteil von 5 bis 50 Gew.%, vorzugsweise von 10 bis 40 Gew.%, in der Hartmatrix vorhanden. Diese Weichphase weist eine besondere Struktur auf. Sie besteht aus einem lamellenartigen Netzwerk, das durch Elmiaufnahmen am Endprodukt, der Formmasse, nachgewiesen werden kann (vgl. Abb. 3 und Abb. 4). Es wird angenommen, daß die besonderen Eigenschaften der Formmasse der vorliegenden Erfindung auf dieser Morphologie der Weichphase beruhen. Bei der Weichphase handelt es sich um ein Pfropfpolymerisat aus den Monomeren $a_1$) und $a_2$) der Hartmatrix, d.h. von Styrol und Acrylnitril, die auf ein Styrol-Butadien-Blockcopolymerisat gepfropft sind.

Wesentlich ist dabei, daß das Styrol-Butadien-Blockcopolymerisat mehr als 50 Gew.% Styrol enthält, einen Styrolgehalt von 50 bis 95 Gew.%, vorzugsweise von 55 bis 90 Gew.% und insbesondere von 60 bis 85 Gew.%, jeweils bezogen auf das Blockcopolymerisat, aufweist (Der andere Bestandteil ist jeweils Butadien, $\Sigma$ = 100 %).

Als Styrol-Butadien-Blockcopolymerisat im Sinne der vorliegenden Erfindung wird ein solches verstanden, das durch anionische Polymerisation mit Hilfe von Lithiuminitiatoren hergestellt worden ist. Der Polybutadienblock weist hierbei die übliche medium-cis-Struktur auf, die sich durch Zusatz polarer Lösungsmittel modifizieren läßt. Die Herstellung derartiger Styrol-Butadien-Blockcopolymerisate ist dem Fachmann bekannt.

Als Styrol-Butadien-Blockcopolymerisate kommen sowohl solche mit scharfem oder mit verschmiertem Übergang in Frage. Diese Blockcopolymerisate können lineare oder radiale Gebilde sein, wobei auch lineare, gekoppelte Produkte verwendbar sind. Vorzugsweise werden von den vorstehend genannten möglichen Strukturen der Blockcopolymerisate solche ausgewählt, bei denen Styrol-Butadien-zwei-Blockcopolymerisate mit der obengenannten Zusammensetzung vorliegen. Besonders bevorzugt sind daher lineare gekoppelte und ungekoppelte Styrol-Butadien-4- oder 2-Blockcopolymerisate mit scharfem oder verschmiertem Übergang und die aus solchen Produkten mit mehr als bifunktionellen Kupplungsmitteln erzielbaren radialen Styrol-Butadien-Blockcopolymerisate, insbesondere mit 2-Blockcopolymerisaten in den die Verzweigung bildenden Ästen. Die Molekulargewichte für die Styrol-Butadien-Blockcopolymerisate liegen im Bereich von 50.000 bis 400.000, insbesondere im Bereich von 70.000 bis 200.000.

### Komponente C

Zusätzlich zu den Komponenten A und B kann die erfindungsgemäße Formmasse, jeweils bezogen auf 100 Gew.-Teile A und B, 1-40 Gew.-Teile, vorzugsweise 1-20 Gew.-Teile einer Komponente C enthalten. Diese Komponente C kann schon vor oder während der Herstellung der Formmasse dem Reaktionsansatz zugegeben werden, oder aber für die Verarbeitung in der Formmasse eingemischt werden.

Unter der Komponente C sollen z.B. auch die für die Herstellung der Formmasse der vorliegenden Erfindung bekannten Hilfsmittel, wie Mineralöle, übliche Ester von aromatischen oder aliphatischen Carbonsäuren mit aliphatischen Alkoholen, Polyalkylenoxide auf Basis von Ethylenoxid und/oder Propylenoxid, Molekulargewichtsregler, Schutzkolloide, Antioxidantien usw. verstanden werden. Als Hilfsmittel seien ferner genannt Gleitmittel, wie Zinkstearat und andere Stearate bzw. andere übliche Hilfsmittel. Auch für die Herstellung von Formteilen aus der Formmasse: Farbstoffe, Antioxidantien, Stabilisatoren, evtl. Flammschutzmittel in den dem Fachmann geläufigen Mengen.

Herstellung der erfindungsgemäßen Formmasse

Die Herstellung erfolgt durch Polymerisation der die Hartmatrix aufbauenden Monomeren $a_1$) und $a_2$), d.h. von Styrol und von Acrylnitril, in Gegenwart eines Styrol-Butadien-Blockcopolymeren. Die Polymerisation kann dabei unter Verwendung der üblichen Initiatoren oder rein thermisch oder gemischt thermisch-radikalisch durchgeführt werden. Sie kann kontinuierlich oder diskontinuierlich erfolgen. Bei der diskontinuierlichen Verfahrensweise ist die Durchführung in einem Zweistufenverfahren bevorzugt, wobei die erste Verfahrensstufe in bekannter Weise in Masse, gegebenenfalls unter Verwendung eines Lösungsmittels, erfolgt und die zweite Stufe in Suspension durchgeführt wird. Verfahren zur kontinuierlichen Durchführung sind in der DE-AS 1 770 392, zur diskontinuierlichen Durchführung in der DE-AS 2 613 352 hinreichend beschrieben, so daß der Fachmann darauf zurückgreifen kann.

Bei dem diskontinuierlichen Verfahren, das in der ersten Stufe in Masse oder Lösung durchgeführt wird, erfolgt mit Hilfe von Scherkräften (Rühren) die Einstellung der erforderlichen Morphologie der Weichphase (Kautschukmorphologie). Die Temperaturen in der ersten Verfahrensstufe liegen im Bereich von 50°C bis 200°C. In der nachfolgenden zweiten Verfahrensstufe, die bevorzugt in Suspension durchgeführt wird, werden dem Reaktionsansatz Wasser und die üblichen wasserlöslichen Suspensionsmittel zugesetzt. Als solche kommen insbesondere in Betracht: Methylcellulose, Oxypropylcellulose, Polyvinylalkohol, Polyvinylpyrrolidon usw.

Bei der Pfropfmisch-Polymerisation der die spätere Hartmatrix bildenden Monomeren in Gegenwart des Styrol-Butadien-Blockcopolymeren werden zunächst die Monomeren, gegebenenfalls unter Zuhilfenahme eines Lösungsmittels, polymerisiert. Dabei erfolgt eine Pfropfung der die Hartmatrix bildenden Monomeren auf den Blockkautschuk.

Dem Fachmann ist bekannt, daß er die Polymerisation je nach Verfahrensführung zu unterschiedlichen Umsätzen bzw. Feststoffgehalten führen kann. Die Festlegung der Umsätze in den einzelnen Reaktoren und damit auch der Feststoffgehalt wird von ihm anhand weniger Versuche festzustellen sein, um optimale Produkte zu erhalten.

Die in den Beispielen und Vergleichsversuchen beschriebenen Parameter wurden wie folgt bestimmt:

1. Vicattemperatur in °C nach DIN 53 460
2. Streckspannung in N/mm² nach DIN 53 455, bei 5 mm/min Abzugsgeschwindigkeit
3. Reißfestigkeit in N/mm² nach DIN 53 455, bei 5 mm/min Abzugsgeschwindigkeit
4. Reißdehnung in % nach DIN 53 455, bei 5 mm/min Abzugsgeschwindigkeit
5. Kerbschlagzähigkeit in kJ/m² nach DIN 53 453 bei 23°C
6. Transparenz: visuell am Preßplättchen von 1 mm Dicke

Die Erfindung wird nachstehend anhand von zwei Beispielen und drei Vergleichsversuchen näher erläutert. Die in den Beispielen und Vergleichsversuchen genannten Teile und Prozente beziehen sich auf das Gewicht.

Beispiele 1 und 2; Vergleichsversuche $V_1$ bis $V_3$

In den Beispielen und Vergleichsversuchen wurde jeweils diskontinuierlich eine Masse-Suspensions-Polymerisation in einem 5 l fassenden Juvokessel durchgeführt. Die Abfuhr der Reaktionswärme erfolgt durch Mantelkühlung. Die Temperatur im Inneren war geregelt. Die erste Verfahrensstufe wurde bei einem Füllgrad von 40 % durchgeführt, die anschließende zweite Verfahrensstufe und damit Endstufe wurde in Suspension bei einem Füllgrad von 80 % beendet. Die Polymerisation wurde isotherm durchgeführt; d.h. die Polymerisationstemperatur betrug in Abwesenheit von Dibenzoylperoxid (BPO) 110 bis 120°C, in Gegenwart von 0,18 Teilen BPO dagegen 75 bis 80°C. In allen Fällen wurde als Regler Tertiärdodecylmercaptan (TDM) verwendet.

In dieser Verfahrensstufe wurde mit einem Anker-Rührer bei einer Umdrehungszahl von 200 U/min gerührt. Die erste Verfahrensstufe wurde bis zu einem Umsatz von 35 % durchgeführt. Die Zusammensetzung der Anfangslösung (Reaktionsansatz) ist in der Tabelle wiedergegeben. Beim Vergleichsversuch V1 wurde ein Homo-Polybutadien ($M_w \sim 180.000$) mit einer medium-cis-Struktur ($\sim 35$ % 1,4-cis, $\sim 55$% 1,4-trans und ca. 10 % 1,2-Vinyl) verwendet. Für die Vergleichsversuche V2 und V3 sowie für die Beispiele 1 und 2 wurden lineare Styrol-Butadien-zwei-Blockcopolymere mit scharfem Übergang ($V_2$ und $V_3$: Verhältnis Styrol : Butadien 40 : 60, $M_w$ ca. 210.000; $B_1$ und $B_2$: Styrol : Butadien 70 : 30, $M_w$ ca. 180.000) mit medium-cis-PBu-Blöcken eingesetzt. Der Polybutadienanteil war bei allen Ansätzen konstant. Zusätzlich wurden dieser Mischung noch 0,12 Teile eines sterisch gehinderten Phenols zugegeben (®Irganox 1076).

4

Nach dem angegebenen Umsatz von 35 % wurden der Reaktionsmischung 1,10 Teile Dicumylperoxid zugesetzt. Anschließend wurden 1800 Teile Wasser, bezogen auf 2000 Teile des Reaktionsansatzes der Massepolymerisation, und 18 Teile eines Schutzkolloides auf der Basis Polyvinylpyrrolidon (®Luviskol K 90) sowie 1,8 Teile Natriumphosphat als Stabilisatoren zugesetzt.

In der Suspensionsstufe wurde drei Stunden bei 110°C, drei Stunden bei 130°C und abschließend noch vier Stunden bei 140°C polymerisiert. Das angefallene Perlpolymerisat wurde abgefiltert und getrocknet. Von den dabei erhaltenen Produkten wurden für ELMI-Aufnahmen Preßplättchen hergestellt und Prüfkörper für die mechanischen Tests angefertigt. Die Ergebnisse sind in der Tabelle angegeben.

Tabelle

| Eigenschaften der Formmassen von Beispielen ($B_n$)und Vergleichsversuchen ($V_n$) | | | | | |
|---|---|---|---|---|---|
| Versuch/Beispiel | V1 | V2 | V3 | B1 | B2 |
| Teile Styrol | 67,3 | 63,4 | 63,4 | 53,5 | 53,5 |
| Teile AN | 22,5 | 21,1 | 21,1 | 17,8 | 17,8 |
| Teile SB-Blockkautschuk | 0 | 13,2 | 13,2 | 26,4 | 26,4 |
| Teile Polybutadien | 7,9 | 0 | 0 | 0 | 0 |
| Teile TDM | 0,20 | 0,20 | 0,18 | 0,20 | 0,18 |
| Teile BPO | 0 | 0 | 0,15 | 0 | 0,15 |
| Gew.% Styrol gebunden in SB-Blockkautschuk | - | 40 | 40 | 70 | 70 |
| Polymerisationstemp. (°C) | 115 | 113 | 76 | 120 | 79 |
| Vicattemp. (°C) | 97,0 | 98,0 | 97,0 | 88,0 | 86,0 |
| Streckspannung ($N/mm^2$) | 28,3 | 39,9 | 39,5 | 27,2 | 28,2 |
| Reißfestigkeit ($N/mm^2$) | 28,3 | 39,4 | 34,1 | 27,1 | 26,5 |
| Reißdehnung (%) | 20 | 5 | 5 | 3 | 3 |
| Kerbschlagzähigkeit ($kJ/m^2$) | 8,1 | 12,3 | 16,7 | 6,0 | 10,5 |
| Transparenz | - | - | - | + | + |
| Abb. 1 bis 4 | | | | | |
| Elmiaufnahmen von Dünnschnitten von Formmassen von | | | | | |
| Versuch 1 ≙ Abb. 1 | | | | | |
| Versuch 2 ≙ Abb. 2 | | | | | |
| Beispiel 1 ≙ Abb. 3 | | | | | |
| Beispiel 2 ≙ Abb. 4 | | | | | |
| (Vergrößerung 10.000, so daß 1 cm auf der Aufnahme 1 μm entspricht) | | | | | |

**Patentansprüche**

1. Thermoplastische Formmasse, enthaltend, jeweils bezogen auf die Formmasse aus A + B,
     A 50 bis 95 Gew.% einer Hartmatrix, aufgebaut aus, bezogen auf A,
          $a_1$) 98 bis 50 Gew.% Styrol,
          $a_2$) 2 bis 50 Gew.% Acrylnitril,
     B 50 bis 5 Gew.% einer Weichphase, die in der Hartmatrix gleichmäßig verteilt ist und die ein Pfropfmischpolymerisat aus den Monomeren $a_1$) und $a_2$) und einem Styrol-Butadien-Blockcopolymerisat darstellt,
     dadurch gekennzeichnet, daß das Styrol-Butadien-Blockcopolymerisatdurch anionische Polymerisation mittels eines Lithium-Initiators hergestellt worden ist und einen Styrolgehalt von 50 bis 95 Gew.% und einen Butadiengehalt von 50 bis 5 Gew.%, jeweils bezogen auf das Blockpolymerisat, aufweist und ein Molekulargewicht (Gewichtsmittel) im Bereich von 50.000 bis 400.000 besitzt.

2. Thermoplastische Formmasse nach Anspruch 1, enthaltend, jeweils bezogen auf die Formmasse aus A + B,
     A 60 bis 90 Gew.% Hartmatrix, aufgebaut aus bezogen auf A,
          $a_1$) 95 bis 70 Gew.% Styrol,

$a_2$) 5 bis 30 Gew.% Acrylnitril,
B 40 bis 10 Gew.% Weichphase, wobei das Styrol-Butadien-Blockcopolymerisat einen Styrolgehalt von 55 bis 90 Gew.% und einen Butadiengehalt von 45 bis 10 Gew.%, jeweils bezogen auf das Blockpolymerisat, aufweist.

3. Thermoplastische Formmasse nach Anspruch 1, enthaltend, jeweils bezogen auf die Formmasse aus A + B,
A 60 bis 90 Gew.% Hartmatrix, aufgebaut aus bezogen auf A,
$a_1$) 90 bis 70 Gew.% Styrol,
$a_2$) 10 bis 30 Gew.% Acrylnitril,
B 40 bis 10 Gew.% Weichphase, wobei das Styrol-Butadien-Blockcopolymerisat einen Styrolgehalt von 60 bis 85 Gew.% und einen Butadiengehalt von 40 bis 15 Gew.%, jeweils bezogen auf das Blockpolymerisat, aufweist.

4. Thermoplastische Formmasse nach Anspruch 1, enthaltend, jeweils bezogen auf die Formmasse A + B,
A 60 bis 90 Gew.% Hartmatrix, aufgebaut aus bezogen auf A,
$a_1$) 85 bis 70 Gew.% Styrol,
$a_2$) 15 bis 30 Gew.% Acrylnitril,
B 40 bis 10 Gew.% Weichphase, wobei das Styrol-Butadien-Blockcopolymerisat linear ist und mit scharfem Übergang und einen Styrolgehalt von 60 bis 85 Gew.% und einen Butadiengehalt von 40 bis 15 Gew.%, jeweils bezogen auf das Blockpolymerisat, aufweist.

5. Verwendung der Formmasse gemäß Anspruch 1 zur Herstellung von Formteilen.

6. Formteil, hergestellt aus einer Formmasse nach Anspruch 1.

**Claims**

1. A thermoplastic molding material which contains, in each case based on the molding material comprising A + B,
A from 50 to 95% by weight of a hard matrix composed of, based on A,
$a_1$) from 98 to 50% by weight of styrene and
$a_2$) from 2 to 50% by weight of acrylonitrile,
B from 50 to 5% by weight of a soft phase which is uniformly dispersed in the hard matrix and which comprises a graft copolymer of the monomers $a_1$) and $a_2$) and a styrene-butadiene block copolymer,
wherein the styrene-butadiene block copolymer has been prepared by anionic polymerization using a lithium initiator and has a styrene content of from 50 to 95% by weight and a butadiene content of from 50 to 5% by weight, each based on the block polymer, and has a molecular weight (weight average) within the range from 50,000 to 400,000.

2. A thermoplastic molding material as claimed in claim 1, which contains, in each case based on the molding material comprising A + B,
A from 60 to 90% by weight of hard matrix composed of, based on A,
$a_1$) from 95 to 70% by weight of styrene and
$a_2$) from 5 to 30% by weight of acrylonitrile,
B from 40 to 10% by weight of soft phase, where the styrene-butadiene block copolymer has a styrene content of from 55 to 90% by weight and a butadiene content of from 45 to 10% by weight, each based on the block polymer.

3. A thermoplastic molding material as claimed in claim 1, which contains, in each case based on the molding material comprising A + B,
A from 60 to 90% by weight of hard matrix composed of, based on A,
$a_1$) from 90 to 70% by weight of styrene and
$a_2$) from 10 to 30% by weight of acrylonitrile,
B from 40 to 10% by weight of soft phase where the styrene-butadiene block copolymer has a styrene content of from 60 to 85% by weight and a butadiene content of from 40 to 15% by weight, each based on the block polymer.

EP 0 278 027 B1

4. A thermoplastic molding material as claimed in claim 1, which contains, in each case based on the molding material comprising A + B,
    A from 60 to 90% by weight of hard matrix composed of, based on A,
        $a_1$) from 85 to 70% by weight of styrene and
        $a_2$) from 15 to 30% by weight of acrylonitrile,
    B from 40 to 10% by weight of soft phase, where the styrene-butadiene block copolymer is linear with a well-defined transition and has a styrene content of from 60 to 85% by weight and a butadiene content of from 40 to 15% by weight, each based on the block polymer.

5. The use of the molding material as claimed in claim 1 for the production of moldings.

6. A molding produced from a molding material as claimed in claim 1.

**Revendications**

1. Masses à mouler thermoplastiques contenant, à chaque fois par rapport à la masse à mouler constituée de A + B,
    A de 50 a 95% en poids d'une matrice dure composée, par rapport à A,
        $a_1$) de 98 à 50% en poids de styrène,
        $a_2$) de 2 à 50% en poids d'acrylonitrile,
    B de 50 a 5% en poids d'une phase molle qui est répartie uniformément dans la matrice dure et qui est un copolymère greffé des monomères $a_1$) et $a_2$) et d'un copolymère séquencé styrène/butadiène,
    caractérisées en ce que le copolymère séquencé styrène/butadiène a été préparé par polymérisation anionique à l'aide d'un agent d'amorçage au lithium et présente une teneur en styrène de 50 à 95% en poids et une teneur en butadiène de 50 à 5% en poids, à chaque fois par rapport au polymère séquencé, et a un poids moléculaire (moyenne en poids) compris entre 50 000 et 400 000.

2. Masses à mouler thermoplastiques selon la revendication 1, contenant, à chaque fois par rapport à la masse à mouler constituée de A + B,
    A de 60 à 90% en poids d'une matrice dure composée, par rapport à A,
        $a_1$) de 95 à 70% en poids de styrène,
        $a_2$) de 5 à 30% en poids d'acrylonitrile,
    B de 40 à 10% en poids d'une phase molle dans laquelle le copolymère séquencé styrène/butadiène a une teneur en styrène de 55 à 90% en poids et une teneur en butadiène de 45 à 10% en poids, à chaque fois par rapport au polymère séquencé.

3. Masses à mouler thermoplastiques selon la revendication 1, contenant à chaque fois par rapport à la masse à mouler constituée de A + B,
    A) de 60 à 90% en poids d'une matrice dure composée, par rapport à A,
        $a_1$) de 90 à 70% en poids de styrène
        $a_2$) de 10 à 30% en poids d'acrylonitrile,
    B de 40 à 10% en poids d'une phase molle dans laquelle le copolymère séquencé styrène/butadiène a une teneur en styrène de 60 à 85% en poids et une teneur en butadiène de 40 à 15% en poids, par rapport au polymère séquencé.

4. Masses à mouler thermoplastiques selon la revendication 1, contenant à chaque fois par rapport à la masse à mouler constituée de A + B,
    A de 60 a 90% en poids d'une matrice dure composée, par rapport à A,
        $a_1$) de 85 à 70% en poids de styrène,
        $a_2$) de 15 à 30% en poids d'acrylonitrile,
    B de 40 à 10% en poids d'une phase molle dans laquelle le copolymère séquencé styrène/butadiène est linéaire et présente une transition nette, avec une teneur en styrène de 60 à 85% en poids et une teneur en butadiène de 40 à 15% en poids, à chaque fois par rapport au polymère séquencé.

5. Utilisation des masses à mouler selon la revendication 1 pour la préparation d'articles moulés.

7

**6.** Articles moulés préparés à partir d'une masse à mouler selon la revendication 1.

Abb. 1 - Versuch 1

Abb. 2 - Versuch 2

Abb. 3 - Beispiel 1

Abb. 4 - Beispiel 2